# EUROPEAN PATENT SPECIFICATION

(11) **EP 2 429 853 B1**
(45) Date of publication and mention of the grant of the patent: **13.07.2016**
(21) Application number: 10775161.2
(22) Date of filing: 04.05.2010
(51) Int. Cl.: G07D 1/02, G07C 5/08, G01D 7/02, B60K 35/00

(54) **PRESENTATION OF INFORMATION IN MOTOR VEHICLE**
DARSTELLUNG VON INFORMATIONEN IN EINEM MOTORFAHRZEUG
PRÉSENTATION D'INFORMATIONS DANS VÉHICULE MOTORISÉ

(30) Priority: 13.05.2009 SE 0950333
(43) Date of publication of application: 21.03.2012
(73) Proprietor: Scania CV AB, 151 87 Södertälje (SE)
(72) Inventor: DANIELSSON, Jan, S-155 31 Nykvarn (SE)
(74) Representative: Scania CV AB
(86) International application number: PCT/SE2010/050485
(87) International publication number: WO 2010/132009

(56) References cited:
- EP-A1- 1 661 762
- EP-A1- 1 674 323
- EP-A2- 1 010 568
- WO-A1-2008/108844
- DE-A1- 10 310 719
- DE-A1- 19 728 226
- DE-A1- 19 961 619
- US-A1- 2005 043 864
- US-A1- 2005 107 925
- US-A1- 2007 069 880

## Description

### BACKGROUND TO THE INVENTION AND PRIOR ART

The present invention relates generally to information systems in motor vehicles. The invention relates in particular to a system according to the preamble of claim 1 and a method according to the preamble of claim 10. The invention relates also to a computer programme according to claim 15 and a computer-readable medium according to claim 16.

The ever-increasing computerisation of functions in modern vehicles makes it possible to present relatively complex information about not only the status of the vehicle but also the conditions in its surroundings, e.g. traffic data, weather data and road data. It also makes it possible for the driver to be informed about suitable driver behaviour in different situations, e.g. appropriate ways of driving over the crest of hills or round bends, when to initiate braking etc. There are usually no standardised symbols for warnings/indications of this kind, which means that adequately informing the driver without his/her being overloaded with input from the information system is problematical. Such overload does of course constitute a traffic safety risk which should be avoided.

There are known solutions whereby the information presented to the driver of a motor vehicle is filtered and/or adapted in various ways. For example, US 7,149,653 describes a system whereby a number of information sources are coordinated so that presentation takes place according to the driver's state and/or behaviour. This entails at least one information source being caused to generate information for presentation at a rate which depends on the driver's state and/or behaviour.

DE 102 08 916 A1 describes a solution whereby a combination instrument comprises a display for instructive and warning messages. After a certain time or after acknowledgement, the display text disappears and is replaced by one or more symbols at some other point on the instrument panel. The driver is thus enabled to learn which symbols correspond to which warnings/messages.

DE 10 2004 001 509 A1 refers to another system whereby text information is displayed by way of explanation of symbols which appear on the instrument panel when the vehicle is in a certain operating state. The text information may be a composite description of the symbols or indicate the importance of dealing with the respective operating state.

US 2007/0124027 describes a system whereby information is provided as a function of the factors which objectively engage the driver's attention when the vehicle is in motion. Thus less information may be presented in situations where the driver is expected to be under greater pressure than at other times. The presentation method may also vary according to the load on the driver.

DE 103 10719 A1 discloses presentation of driver individual data in a vehicle.

However, there is no prior solution which provides real personalisation of the behaviour of the information system whereby any adaptations of information presentation would pertain to a certain vehicle. If a new driver takes over a vehicle from another driver, the behaviour of the information system will therefore depend on the settings/adaptations effected by the previous driver.

### SUMMARY OF THE INVENTION

The object of the present invention is therefore to propose a solution which alleviates the above problems and therefore provides effective and user-friendly adaptation to driver of the behaviour of an information presentation system for a motor vehicle.

Aspects of the invention are described in the independent claims. The system described in the introduction is configured to read a driver-specific identity. The control unit is further configured to receive the identity read and to read presentation parameters from a predetermined storage space. Thereafter, the control unit generates the output data on the further basis of the identity and the presentation parameters so that a certain status signal results in an information presentation via the viewing unit, which presentation depends on a presentation history reflected by the presentation parameters for the respective identity. The control unit also continuously updates the presentation history in said storage space.

An important advantage achieved by the information presentation system here concerned is that the information presentation can be made fully adapted to the individual driver, making it possible to avoid misunderstandings and potential safety problems caused by other drivers' settings in the system.

The viewing unit is configured to present said information via a visual interface and/or an acoustic interface. This is advantageous in making it possible for the visual interface to be read whenever the driver thinks fit, whereas the acoustic interface does not require the driver's visual attention.

Furthermore, the viewing unit is configured to present the information via a visual interface adapted to displaying text information and/or graphic data in symbolic form. This makes it possible for data displayed in symbolic form to be accompanied by explanatory text, enhancing the likelihood of the driver assimilating the information.

The control unit is configured to generate the output data so that a certain status signal results in the viewing unit presenting on the first occasion text information and graphic data in symbolic form and presenting on the second occasion graphic data in symbolic form *without* presenting said text information. Thus the symbols may initially be accompanied by explanatory text but on subsequent occasions be displayed without such text. Of course, said first and second occasions need not be consecutive, as any number of presentations may take place between them.

Furthermore, the information presentation indicates how many times a certain type of information has been presented via a given type of information presentation, and/or how much time has passed since a certain type of information was presented via a given type of information presentation when the memory module connected at the time to the docking unit was connected to the docking unit. The result is still more alternatives for information presentation adapted to driver.

According to a further embodiment of this aspect of the invention, the viewing unit is configured to also present the information via an acoustic interface. Such a combination of sound and image affords the driver great flexibility as regards choice of data to pay attention to.

According to a further embodiment of this aspect of the invention, the control unit is configured to generate the output data so that on a third occasion, when at least one further condition with respect to the at least one event parameter is fulfilled, the status symbol results in the viewing unit generating an acoustic signal without said graphic data or said text information being presented. The result is a further alternative for information presentation adapted to driver.

According to a further embodiment of this aspect of the invention, the control unit is adapted to receiving manually generated signals acknowledging information presentation via the viewing unit. In response to receiving a signal acknowledging presentation of a certain status signal via a first type of information presentation, the control unit is adapted to reacting on a subsequent occasion when that status signal is received by generating output data for presentation of the status signal via a *second* type of information presentation. In this situation, the presentation history stored in the storage space will indicate for each status signal whether or not an acknowledgement signal has been received for the respective type of information presentation among types of information presentation applicable for the status signal. This provides the possibility of system behaviour which depends on the driver's individual acknowledgements of different information presentations.

According to another embodiment of this aspect of the invention, the storage space for the presentation history is part of a component specific to the vehicle. The presentation history is thus always stored in the vehicle. A certain vehicle may thereby with advantage store presentation histories for a large number of different drivers, making it easy to extract appropriate data depending on which driver's memory module is at the time put into the docking unit.

According to embodiments of this aspect of the invention, the system comprises either a means configured to receive data describing the driver-specific identity and the associated authentication details, or a docking unit configured to accommodate, and read an identity from, a drive-specific memory module.

According to another embodiment of this aspect of the invention, the driver-specific memory module includes the storage space for the presentation history, thereby ensuring access to appropriate presentation histories. It is also very easy for settings made by a driver in a first vehicle to be transferred to a second vehicle. This further results in important time gains in that drivers can interact consistently with any vehicle, which is of course advantageous with regard to both efficiency and traffic safety.

According to another aspect of the invention, the object is achieved by the method described in the introduction which further comprises receiving a driver-specific identity and reading presentation parameters from a predetermined storage space. The output data is generated on the further basis of the identity and the presentation parameters so that a certain status signal results in an information presentation via the viewing unit, which presentation depends on a presentation history reflected by the presentation parameters for the respective identity. The presentation history stored in the predetermined storage space is also continuously updated. The advantages of this method and of its preferred embodiments are indicated above by the discussion with reference to the proposed information presentation system.

According to a further aspect of the invention, the object is achieved by a computer programme downloadable directly to the internal memory of a computer and comprising software for controlling the steps according to the method proposed above when said programme is run on a computer.

According to a yet further aspect of the invention, the object is achieved by a computer-readable medium with a programme stored on it, which programme is adapted to enabling a computer to control the steps according to the method proposed above.

### BRIEF DESCRIPTION OF THE DRAWINGS

The present invention is explained in more detail below on the basis of embodiments described by way of examples with reference to the attached drawings.
- Figure 1: depicts schematically an information presentation system according to preferred embodiments of the invention, and
- Figure 2: depicts a flowchart illustrating the general method according to the invention.

### DESCRIPTION OF EMBODIMENTS OF THE INVENTION

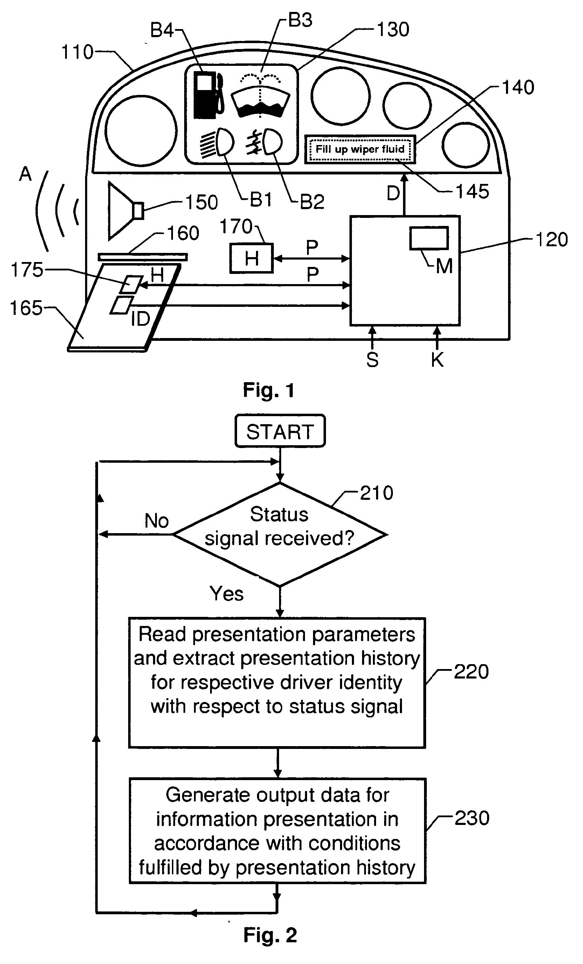

We refer initially to Figure 1, which depicts a proposed information presentation system for a motor vehicle. The system comprises a viewing unit 110 and a control unit 120. The system is also adapted to reading a driver-specific identity ID. The identity ID may for example be indicated by data input via an input or reading means, e.g. a push-button set or a scanner. In such cases it is advantageous for the identity ID to be accompanied by authentication details which confirm the correctness of the data. Alternatively, the system may comprise a docking unit 160 configured to accommodate a driver-specific memory module 165 and to read the identity ID from a memory module 165 put into the docking unit 160. The driver-specific memory module 165 may therefore take the form of an ID document of smart card type.

The viewing unit 110 is configured to present information about the vehicle itself and/or the surroundings of the vehicle (e.g. data concerning traffic situation, weather conditions, state of roads, navigation data, journey data etc.). In addition to conventional indicating instruments, the viewing unit 110 with advantage includes for this purpose a graphic display unit 130 and/or a text screen 140.

The control unit 120 is configured to receive the identity ID read and to read event/presentation parameters P from a predetermined storage space, e.g. a specific memory component 170 in the vehicle or a memory space 175 in the driver-specific memory module 165. The control unit 120 is also configured to receive status signals S which describe states of the vehicle and/or its surroundings. On the basis of the status signals S, the event/presentation parameters P and the identity ID, the control unit 120 is configured to generate the output data D for presentation via the viewing unit 110, e.g. in the form of text messages 145, graphic symbols B1, B2, B3 and B4 and/or acoustic signals A.

In this system, the output data D are generated so that a certain status signal S results in an information presentation via the viewing unit 110, which presentation depends on a presentation history H reflected by the presentation parameters P for the respective identity ID. Specifically, the output data D are such that a certain status signal S results in a first type of information presentation on a first occasion and in a second type of information presentation on a second occasion, provided that at least one condition not fulfilled on the first occasion with regard to the at least one event parameter P is fulfilled on the second occasion. It may be worth noting here that the first and second occasions need not be consecutive, as any number of other occasions may occur between them. Moreover, the sequence of occasions may be reversed so that the second occasion actually occurs before the first occasion. The prerequisites are therefore that a first set of conditions is fulfilled on a first occasion (and the status signal S then results in a first type of information presentation) and that a second set of conditions is fulfilled on a second occasion (and the status signal S then results in a second type of information presentation).

Irrespective of where the predetermined storage space 170 or 175 is situated, the control unit 120 is also configured to continuously update the presentation history H in that storage space.

According to what is related above, the viewing unit 110 may with advantage be configured to present information via a visual interface and/or an acoustic interface. The visual interface may here be represented by a graphic display unit 130 and/or a text screen 140.

The graphic display unit 130 is adapted to displaying graphic data in symbolic form, e.g. a first symbol B1 representing front lamp settings, a second symbol B2 representing rear lamp settings, a third symbol B3 warning of low wiper fluid level and a fourth symbol B4 warning of low fuel level. The text screen 140 is adapted to displaying text messages 145, e.g. an exhortation to replenish wiper fluid. In response to a status signal S indicating that the wiper fluid level is below a threshold value, the control unit 120 may therefore generate output data D so that the third graphic symbol B3 and/or said text message 145 is/are presented via the viewing unit 110.

According to embodiments of the invention, the viewing unit 110 is also configured to present information via an acoustic interface 150, e.g. a loudspeaker or similar element. This makes it possible for the control unit 120 to generate output data D so that in certain circumstances, as an alternative or complement to the visual information, a status signal S results in an acoustic signal A.

Specifically, the control unit 120 may be configured to generate the output data D so that a certain status signal S on a first occasion results in the viewing unit 110 presenting text information 145 together with graphic data B3 in symbolic form, whereas on a second occasion (when the presentation history H for the respective identity ID indicates that another set of conditions is fulfilled) the control unit 120 will instead generate the output data D so that the viewing unit 110 presents graphic data B3 in symbolic form without said text information 145 being presented in response to the status signal S.

The control unit 120 may with advantage further be configured to generate the output data D so that on a third occasion (when the presentation history H for the respective identity ID indicates that at least one further condition is fulfilled) the status signal S results in the viewing unit 110 generating an acoustic signal A without said graphic data B3 or said text information 145 being presented. Presentation of the acoustic signal A and presentation of the graphic symbol data B3 may of course overlap in time, e.g. on said second occasion, so that the driver is thereby taught the meaning of the acoustic signal A. That signal may in fact be regarded as a sort of "sound icon" with which the driver becomes familiar over time. The acoustic signal A may be represented by a voice message or a warning sound. The type of acoustic signal A may also vary depending on the presentation history H for the respective identity ID, e.g. so that a voice message is played on a first occasion and a warning sound is generated on a second occasion in response to a certain status signal S or combination of status signals S. Depending on degree of seriousness of the respective information, the acoustic signal A may be generated either continuously or recurrently until appropriate action has been taken.

According to an embodiment of the invention, the presentation history H indicates how many times a certain type of status information has been presented via a given type of information presentation. Alternatively, or additionally, the presentation history H may indicate how much time has passed since a certain type of information was presented via a given type of information presentation when the memory module 165 connected at the time to the docking unit 160 was connected to the docking unit 160. This makes it possible for the information presentation to be adapted so that if it is thought that the driver may have forgotten what a certain signal, symbol etc. represents, the viewing unit 110 will present more comprehensive information in response to a certain status signal S or combination of status signals S.

To provide the driver with a direct possibility of adapting the behaviour of the information presentation system, the control unit 120 may with advantage be adapted to receiving manually generated signals K which acknowledge information presentation via the viewing unit 110. In response to receiving a signal K acknowledging presentation of a certain status signal S via a *first* type of information presentation, the control unit 120 is thus adapted to reacting on a subsequent occasion when that status signal S is received by generating output data D for presentation of the status signal S via a *second* type of information presentation. The control unit 120 also updates the presentation history H stored in the storage space 170 or 175 for the status signals S, so that there is for each status signal S an indication as to whether or not an acknowledgement signal K has been received for the respective type of information presentation among types of information presentation applicable for the status signal S (i.e. text message, graphic symbol, voice message, warning sound etc.). Thus for example a text message 145 which initially accompanies a graphic symbol B3 may be cancelled so that only the graphic symbol B3 is presented the next time the same situation occurs.

The previously mentioned time recording may of course be combined with the use of the acknowledgement signals K so that if sufficient time has passed since a certain type of information was presented via a given type of information presentation (when the memory module 165 connected at the time to the docking unit 160 was connected to the docking unit 160) a previously cancelled information presentation is nevertheless displayed in response to a status signal S. This happens typically when it is expected that the driver may have forgotten what the type of information otherwise presented represents.

The control unit 120 includes with advantage, or is in some other way associated with, a memory module M which comprises software for causing the unit to perform the procedures described above.

To summarise, the general method according to the invention for presenting vehicle-related status information in a motor vehicle is described below with reference to the flowchart in Figure 2.

A first step 210 investigates whether or not a status signal has been received. Finding that a status signal has been received is followed by a step 220, otherwise the procedure loops back and stops at step 210.

Step 220 reads presentation parameters from a predetermined space, e.g. a memory component in the vehicle or a memory space in the driver-specific memory module, and extracts from the presentation parameters a presentation history for the driver identity indicated by the driver-specific memory module connected at the time to the docking unit.

This is followed by a step 230 in which the output data are generated for presentation via the viewing unit. The output data D are such that the status signal is presented in accordance with the conditions fulfilled by the presentation history. This means that a certain status signal results in a first type of information presentation on a first occasion and in a second type of information presentation on a second occasion, provided that at least one condition not fulfilled on the first occasion with respect to the presentation history for the respective identity is fulfilled on the second occasion.

Finally, the procedure loops back to step 210 for renewed detection of any status signals.

The method steps described with respect to Figure 2 may be controlled by a programmed computer apparatus. In addition, although the embodiments of the invention described above with reference to the drawings comprise a computer and processes performed in a computer, the invention extends to computer programmes, particularly computer programmes on or in a carrier adapted to practical implementation of the invention. The programme may be in the form of source code, object code, code intermediate between source and object code, e.g. in partly compiled form, or in any other form which it may be appropriate to use in implementing the process according to the invention. The carrier may be any desired entity or device capable of carrying the programme. For example, the carrier may comprise a storage medium such as a flash memory, a ROM (read only memory), e.g. a CD (compact disc) or a semiconductor ROM, EPROM (electrically programmable ROM), EEPROM (erasable EPROM), or a magnetic recording medium, e.g. a floppy disc or hard disc. In addition, the carrier may be a transmitting carrier such as an electrical or optical signal which can be led through an electric or optical cable or via radio or in some other way. When the programme is triggered by a signal which can be led directly by a cable or some other device or means, the carrier may take the form of such a cable, device or means. Alternatively the carrier may be an integrated circuit in which the programme is embedded, whereby the integrated circuit is adapted to performing, or to being used in the performance of, the respective processes.

The invention is not limited to the embodiments described with reference to the drawings but may be varied freely within the scope of the claims set out below.

## Claims

1. An information presentation system for a motor vehicle, which system comprises
a viewing unit (110) configured to present information about the vehicle and/or the surroundings of the vehicle, and
a control unit (120) configured to
receive status signals (S) describing states of the vehicle and/or its surroundings,
receive at least one event parameter (P, H) and, on the basis of the status signals (S) and the at least one event parameter (P, H),
generate output data (D) for presentation via the viewing unit (110), which output data (D) are such that a certain status signal (S) results in a first type of information presentation on a first occasion and in a second type of information presentation on a second occasion, provided that at least one condition not fulfilled on the first occasion with respect to at least one event parameter (P, H) is fulfilled on the second occasion,
wherein the system is configured to read data describing a driver-specific identity (ID) and the control unit (120) is configured to
receive the identity (ID) read,
read presentation parameters (P) from a predetermined storage space (170, 175),
generate the output data (D) on the further basis of the identity (ID) and the presentation parameters (P) so that a certain status signal (S) results in an information presentation via the viewing unit (110), which presentation depends on a presentation history (H) reflected by the presentation parameters (P) for the respective identity (ID),
continuously update the presentation history (H) in said storage space (170, 175), wherein the viewing unit (110) is configured to present said information via a visual interface (130, 140) and/or an acoustic interface (150), and
configured to present said information via a visual interface (140; 130) which is adapted to displaying text information (145) and/or graphic data (B1, B2, B3, B4) in symbolic form **characterised in that** the control unit (120) is configured to generate the output data (D) so that a certain status signal (S) on said first occasion results in the viewing unit (110) presenting text information (145) and graphic data (B3) in symbolic form, and that the status signal (S) on said second occasion results in the viewing unit (110) presenting graphic data (B3) in symbolic form without said text information (145) being presented, in which the presentation history (H) indicates
how many times a certain type of information has been presented via a given type of information presentation, and/or
how much time has passed since a certain type of information was presented via a given type of information presentation when the memory module (165) connected at the time to the docking unit (160) was connected to the docking unit (160).

2. The system according to claim 1, such that the viewing unit (110) is configured to also present said information via an acoustic interface (150).

3. The system according to claims 1 and 2, such that the control unit (120) is configured to generate the output data (D) so that on a third occasion, when at least one further condition with respect to at least one event parameter (H) is fulfilled, the status signal (S) results in the viewing unit (110) generating an acoustic signal (A) without said graphic data (B3) or said text information (145) being presented.

4. The system according to any one of claims 1 to 3, such that the control unit (120) is adapted to
receiving manually generated signals (K) which acknowledge information presentation via the viewing unit (110), and in response to a signal (K) received in acknowledgement of presentation of a certain status signal (S) via a first type of information presentation on a subsequent occasion when that status signal (S) is received, and
generating output data D for presentation of the status signal (S) via a second type of information presentation,
and
such that the presentation history (H) stored in the storage space (170, 175) for each status signal (S) indicates whether or not an acknowledgement signal (K) has been received for respective type of information presentation among types of information presentation applicable for the status signal (S).

5. The system according to any one of the foregoing claims, such that the storage space (170) for the presentation history (H) is part of a component specific to the vehicle.

6. The system according to any one of the foregoing claims, such that the system comprises means configured to receive data describing the identity (ID) and to receive authentication details pertaining to the latter.

7. The system according to any one of claims 1 to 4, such that the system comprises a docking unit (160) which is configured to
accommodate a driver-specific memory module (165) and read the identity (ID) from a memory module (165) put into the docking unit (165).

8. The system according to claim 7, such that the driver-specific memory module (165) includes the storage space (175) for the presentation history (H).

9. A method for presentation of information in a motor vehicle, which method comprises
presentation via a viewing unit (110) of information about the vehicle and/or the surroundings of the vehicle,
receiving status signals (S) describing states of the vehicle and/or its surroundings,
receiving at least one event parameter (P, H) and, on the basis of the status signals (S) and the at least one event parameter (P, H),
generating output data (D) for presentation via the viewing unit (110), which output data (D) are such that a certain status signal (S) results in a first type of information presentation on a first occasion and in a second type of information presentation on a second occasion, provided that at least one condition not fulfilled on the first occasion with respect to at least one event parameter (P, H) is fulfilled on the second occasion,
receiving a driver-specific identity (ID),
reading presentation parameters (P) from a predetermined storage space (170, 175),
generating the output data (D) on the further basis of the identity (ID) and the presentation parameters (P) so that a certain status signal (S) results in an information presentation via the viewing unit (110), which presentation depends on a presentation history (H) reflected by the presentation parameters (P) for the respective identity (ID),
continuously updating the presentation history (H) stored in the predetermined storage space (170, 175), presentation of said information via a visual interface (130, 140) and/or an acoustic interface (150), and presentation of said information in the form of text information (145) and/or graphic data (B1, B2, B3, B4) in symbolic form, **characterised in**
generation of the output data (D) on said first occasion so that a certain status signal (S) results in the viewing unit (110) presenting text information (145) and graphic data (B3) in symbolic form and
generation of the output data (D) on said second occasion so that the status signal (S) results in the viewing unit (110) presenting graphic data (B3) in symbolic form without said text information (145) being presented, wherein the presentation history (H) indicates
how many times a certain type of information has been presented via a given type of information presentation, and/or
how much time has passed since a certain type of information was presented via a given type of information presentation when the memory module (165) connected at the time to the docking unit (160) was connected to the docking unit (160).

10. The method according to claim 9, comprising presentation of said information in the form of acoustic signals (A).

11. The method according to claims 9 and 10, comprising generation of the output data (D) so that on a third occasion, when at least one further condition with respect to the at least one event parameter (H) is fulfilled, the status signal (S) results in the viewing unit (110) generating an acoustic signal (A) without said graphic data (B3) or said text information (145) being presented.

12. The method according to any one of claims 9 to 11, comprising the consecutive steps of
receiving a first status signal (S),
generating a first type of information presentation (145, B3) reflecting the first status signal (S),
receiving a manually generated signal (K) which acknowledges the first type of information presentation (145, B3),
updating the presentation history (H) for the first status signal (S) with regard to
the type of information presentation (145, B3) and a time for receiving the acknowledgement signal (K), receiving the first status signal (S), and
generating a second type of information presentation (B3) which reflects the first status signal (S), provided that the first status signal (S) is received within a predetermined period of time after the time when the acknowledgement signal (K) was received.

13. A computer programme directly downloadable to the internal memory (M) of a computer, comprising software for controlling the steps according to any one of claims 9 to 12 when said programme is run on the computer.

14. A computer-readable medium (M) with a programme stored on it, which programme is adapted to enabling a computer to control the steps according to any one of claims 9 to 12.

## Patentansprüche

1. I nformationsdarstellungssystem für ein Kraftfahrzeug, wobei das System
eine Betrachtungseinheit (110) umfasst, die konfiguriert ist zum Darstellen von Information über das Fahrzeug und/oder die Umgebung des Fahrzeugs, und
eine Steuereinheit (120), die konfiguriert ist zum Empfangen von Statussignalen (S), die Zustände des Fahrzeugs und/oder dessen Umgebung beschreiben,
Empfangen von mindestens einem Ereignisparameter (P, H) und, basierend auf den Statussignalen (S) und dem mindestens einen Ereignisparameter (P, H),
Erzeugen von Ausgangsdaten (D) zur Darstellung über die Betrachtungseinheit (110), wobei die Ausgangsdaten (D) derart sind, dass ein bestimmtes Statussignal (S) zu einem ersten Typ von Informationsdarstellung bei einer ersten Gelegenheit und zu einem zweiten Typ von Informationsdarstellung bei einer zweiten Gelegenheit führt, unter der Voraussetzung, dass mindestens eine Bedingung, die nicht bei der ersten Gelegenheit unter Berücksichtigung mindestens eines Ereignisparameters (P, H) erfüllt wurde, bei der zweiten Gelegenheit erfüllt wird,
wobei das System konfiguriert ist zum Auslesen von Daten, die eine treiber-spezifische Identität (ID) beschreiben, und die Steuereinheit (120) konfiguriert ist zum Empfangen der ausgelesenen Identität (ID),
Auslesen von Darstellungsparametern (P) von einem vorbestimmten Speicherplatz (170, 175),
Erzeugen der Ausgangsdaten (D), ferner basierend auf der Identität (ID) und den Darstellungsparametern (P) derart, dass ein bestimmtes Statussignal (S) zu einer Informationsdarstellung über die Betrachtungseinheit (110) führt, wobei die Darstellung von einer Darstellungshistorie (H) abhängt, die durch die Darstellungsparameter (P) für die jeweilige Identität (ID) abgebildet wird,
kontinuierliches Aktualisieren der Darstellungshistorie (H) in dem Speicherplatz (170, 175), wobei die Betrachtungseinheit (110) konfiguriert ist zum Darstellen der Information über eine visuelle Schnittstelle (130, 140) und/oder eine akustische Schnittstelle (150), und konfiguriert ist zum Darstellen der Information über eine visuelle Schnittstelle (140; 130), welche ausgebildet ist zum Darstellen von Textinformation (145) und/oder graphischen Daten (B1, B2, B3, B4) in symbolischer Form, **dadurch gekennzeichnet, dass** die Steuereinheit (120) konfiguriert ist zum Erzeugen der Ausgangsdaten (D), derart, dass ein bestimmtes Statussignal (S) bei der ersten Gelegenheit dazu führt, dass die Betrachtungseinheit (110) Textinformation (145) und Graphikdaten (B3) in symbolischer Form darstellt, und dass das Statussignal (S) bei der zweiten Gelegenheit dazu führt, dass die Betrachtungseinheit (110) graphische Daten (B3) in symbolischer Form ohne die dargestellte Textinformation (145) darstellt, wobei die Darstellungshistorie (H) anzeigt,
wie oft ein bestimmter Typ von Information über einen gegebenen Typ von Informationsdarstellung dargestellt wurde, und/oder
wieviel Zeit vergangen ist, seit ein bestimmter Typ von Information über einen gegebenen Typ von Informationsdarstellung dargestellt wurde, wenn das zu der Zeit mit der Docking-Einheit (160) verbundene Speichermodul (165) mit der Docking-Einheit (160) verbunden war.

2. System nach Anspruch 1, wobei die Betrachtungseinheit (110) auch konfiguriert ist zum Darstellen der Information über eine akustische Schnittstelle (150).

3. System nach Anspruch 1 oder 2, wobei die Steuereinheit (120) konfiguriert ist zum Erzeugen der Ausgangsdaten (D) derart, dass bei einer dritten Gelegenheit, wenn mindestens eine weitere Bedingung unter Berücksichtigung mindestens eines Ereignisparameters (H) erfüllt ist, das Statussignal (S) dazu führt, dass die Betrachtungseinheit (110) ein akustisches Signal (A) ohne die graphischen Daten (B3) oder die dargestellte Textinformation (145) erzeugt.

4. System nach einem der Ansprüche 1 bis 3, wobei die Steuereinheit (120) ausgebildet ist zum
Empfangen manuell erzeugter Signale (K), welche die Informationsdarstellung über die Betrachtungseinheit (110) bestätigen, und als Antwort auf ein Signal (K), das zur Bestätigung der Darstellung von einem bestimmten Statussignal (S) über einen ersten Typ von Informationsdarstellung bei einer darauffolgenden Gelegenheit empfangen wurde, wenn das Statussignal (S) empfangen wird, und
Erzeugen von Ausgangsdaten D zur Darstellung des Statussignals (S) über einen zweiten Typ von Informationsdarstellung, und
wobei die Darstellungshistorie (H), die auf dem Speicherplatz (170, 175) für jedes Statussignal (S) gespeichert wurde, entweder anzeigt, ob ein Bestätigungssignal (K) für einen jeweiligen Typen von Informationsdarstellung unter Typen von für das Statussignal (S) anwendbarer Informationsdarstellung.

5. System nach einem der vorangegangenen Ansprüche, wobei der Speicherplatz (170) für die Darstellungshistorie (H) Teil einer fahrzeugspezifischen Komponente ist.

6. System nach einem der vorangegangenen Ansprüche, wobei das System Mittel umfasst, die konfiguriert sind zum Empfangen von die Identität (ID) beschreibenden Daten und zum Empfangen von Identifikationsdetails betreffend die Identität (ID).

7. System nach einem der Ansprüche 1 bis 4, wobei das System eine Docking-Einheit (160) umfasst, welche konfiguriert ist zum
Unterbringen eines treiber-spezifischen Speichermoduls (165) und
Lesen der Identität (ID) von einem in die Docking-Einheit (165) eingesetzten Speichermodul (165).

8. System nach Anspruch 7, wobei das treiber-spezifische Speichermodul (165) den Speicherplatz (175) für die Darstellungshistorie (H) enthält.

9. Verfahren zur Darstellung von Information in einem Kraftfahrzeug, wobei das Verfahren umfasst:
Darstellen über eine Betrachtungseinheit (110) von Information über das Fahrzeug und/oder die Umgebung des Fahrzeugs,
Empfangen von Statussignalen (S), die Zustände des Fahrzeugs und/oder dessen Umgebung beschreiben,
Empfangen von mindestens einem Ereignisparameter (P, H) und, basierend auf den Statussignalen (S) und dem mindestens einen Ereignisparameter (P, H),
Erzeugen von Ausgangsdaten (D) zur Darstellung über die Betrachtungseinheit (110), wobei die Ausgangsdaten (D) derart sind, dass ein bestimmtes Statussignal (S) zu einem ersten Typ von Informationsdarstellung bei einer ersten Gelegenheit und zu einem zweiten Typ von Informationsdarstellung bei einer zweiten Gelegenheit führt, unter der Voraussetzung, dass mindestens eine Bedingung, die nicht bei der ersten Gelegenheit unter Berücksichtigung mindestens eines Ereignisparameters (P, H) erfüllt wurde, bei der zweiten Gelegenheit erfüllt wird,
Empfangen einer treiber-spezifischen Identität (ID),
Auslesen von Darstellungsparametern (P) von einem vorbestimmten Speicherplatz (170, 175),
Erzeugen der Ausgangsdaten (D), ferner basierend auf der Identität (ID) und den Darstellungsparametern (P), derart, dass ein bestimmtes Statussignal (S) zu einer Informationsdarstellung über die Betrachtungseinheit (110) führt, wobei die Darstellung von einer Darstellungshistorie (H) abhängt, die durch die Darstellungsparameter (P) für die jeweilige Identität (ID) abgebildet wird,
kontinuierliches Aktualisieren der auf dem vorbestimmten Speicherplatz (170, 175) gespeicherten Darstellungshistorie (H),
Darstellen der Information über eine visuelle Schnittstelle (130, 140) und/oder eine akustische Schnittstelle (150), und
Darstellung der Information in Form von Textinformation (145) und/oder graphischen Daten (B1, B2, B3, B4) in symbolischer Form,
**gekennzeichnet durch**
Erzeugen von Ausgangsdaten (D) bei der ersten Gelegenheit, derart, dass ein bestimmtes Statussignal (S) dazu führt, dass die Betrachtungseinheit (110) Textinformation (145) und graphische Daten (B3) in symbolischer Form darstellt, und
Erzeugen von Ausgangsdaten (D) bei der zweiten Gelegenheit, derart, dass das Statussignal (S) dazu führt, dass die Betrachtungseinheit (110) graphische Daten (B3) in symbolischer Form ohne die dargestellte Textinformation (145) darstellt, wobei die Darstellungshistorie (H) anzeigt
wie oft ein bestimmter Typ von Information über einen gegebenen Typ von Informationsdarstellung dargestellt wurde, und/oder
wieviel Zeit vergangen ist, seit ein bestimmter Typ von Information über einen gegebenen Typ von Informationsdarstellung dargestellt wurde, wenn das zu der Zeit mit der Docking-Einheit (160) verbundene Speichermodul (165) mit der Docking-Einheit (160) verbunden war.

10. Verfahren nach Anspruch 9, umfassend den Schritt Darstellen der Information in Form von akustischen Signalen (A).

11. Verfahren nach Anspruch 9 oder 10, umfassend den Schritt Erzeugen von Ausgangsdaten (D), derart, dass bei einer dritten Gelegenheit, wenn mindestens eine weitere Bedingung unter Berücksichtigung des mindestens einen Ereignisparameters (H) erfüllt ist, das Statussignal (S) dazu führt, dass die Betrachtungseinheit (110) ein akustisches Signal (A) ohne die graphischen Daten (B3) oder die dargestellte Textinformation (145) erzeugt.

12. Verfahren nach einem der Ansprüche 9 bis 11, umfassend die aufeinanderfolgenden Schritte
Empfangen eines ersten Statussignals (S),
Erzeugen eines ersten Typs von Informationsdarstellung (145, B3), der das erste Statussignal (S) abbildet,
Empfangen eines manuell erzeugten Signals (K), welches den ersten Typ der Informationsdarstellung (145, B3) bestätigt,
Aktualisieren der Darstellungshistorie (H) für das erste Statussignal (S) unter Berücksichtigung
des Typs der Informationsdarstellung (145, B3) und
einer Zeit zum Empfangen des Bestätigungssignals (K),
Empfangen des ersten Statussignals (S), und
Erzeugen eines zweiten Typs der Informationsdarstellung (B3), welches das erste Statussignal (S) abbildet, unter der Voraussetzung, dass das erste Statussignal (S) innerhalb einer vorbestimmten Zeitdauer empfangen wird, nach der Zeit, als das Bestätigungssignal (K) empfangen wurde.

13. Computerprogramm, das direkt auf den internen Speicher (M) eines Computers heruntergeladen werden kann, umfassend Software zum Steuern der Schritte nach einem der Ansprüche 9 bis 12, wenn das Programm auf dem Computer läuft.

14. Computer-lesbares Medium (M) mit einem Programm, das darauf gespeichert ist, wobei das Programm dazu ausgebildet ist, einen Computer dazu zu befähigen, die Schritte nach einem der Ansprüche 9 bis 12 zu steuern.

## Revendications

1. Système de présentation d'information pour un véhicule à moteur, ce système comprenant :
une unité de visualisation (110) configurée de façon à présenter une information concernant le véhicule et/ou l'environnement du véhicule, et
une unité de commande (120), configurée de façon à :
recevoir des signaux d'état (S) décrivant des états du véhicule et/ou de son environnement,
recevoir au moins un paramètre d'évènement (P, H), et, en fonction des signaux d'état (S) et du au moins un paramètre d'évènement (P, H),
générer des données de sortie (D) pour une présentation par l'intermédiaire de l'unité de visualisation (110), ces données de sortie (D) étant telles qu'un certain signal d'état (S) produise en résultat un premier type de présentation d'information à une première occasion et un deuxième type de présentation d'information à une deuxième occasion, pourvu qu'au moins une condition non satisfaite à la première occasion en ce qui concerne le au moins un paramètre d'évènement (P, H) soit satisfaite à la deuxième occasion,
dans lequel le système est configuré de façon à lire des données décrivant une identité spécifique au conducteur (ID), et l'unité de commande (120) est configurée de façon à:
recevoir l'identité (ID) lue,
lire des paramètres de présentation (P) à partir d'un espace de mémorisation prédéterminé (170, 175),
générer les données de sortie (D) en fonction, de façon additionnelle, de l'identité (ID) et des paramètres de présentation (P), de telle sorte qu'un certain signal d'état (S) produise en résultat une présentation d'information par l'intermédiaire de l'unité de visualisation (110), cette présentation dépendant d'un historique de présentation (H) reflété par les paramètres de présentation (P) pour l'identité respective (ID),
mettre à jour de façon continue l'historique de présentation (H) dans ledit espace de mémorisation (170, 175), l'unité de visualisation (110) étant configurée de façon à présenter ladite information par l'intermédiaire d'une interface visuelle (130, 140) et/ou d'une interface acoustique (150), et configurée de façon à présenter ladite information par l'intermédiaire d'une interface visuelle (140 ; 130), qui est adaptée pour afficher une information de texte (145) et/ou des données graphiques (B1, B2, B3, B4) sous forme de symboles,
**caractérisé en ce que** l'unité de commande (120) est configurée pour générer les données de sortie (D) de telle sorte qu'un certain signal d'état (S), lors de ladite première occasion, produise en résultat la présentation dans l'unité de visualisation (110) d'une information de texte (145) et de données graphiques (B3) sous forme de symboles,
et **en ce que** le signal d'état (S), lors de ladite deuxième occasion, produise en résultat la présentation dans l'unité de visualisation (110) de données graphiques (B3) sous forme de symboles sans la présentation de ladite information de texte (145), l'historique de présentation (H) indiquant :
le nombre de fois où un certain type d'information a été présenté par l'intermédiaire d'un type donné de présentation d'information, et/ou
le temps qui s'est écoulé depuis qu'un certain type d'information a été présenté par l'intermédiaire d'un type donné de présentation d'information lorsque le module de mémoire (165) connecté au moment où à l'unité d'implantation (160) a été connectée à l'unité d'implantation (160).

2. Système selon la revendication 1, dans lequel l'unité de visualisation (110) est configurée de façon à présenter également ladite information par l'intermédiaire d'une interface acoustique (150).

3. Système selon les revendications 1 et 2, dans lequel l'unité de commande (120) est configurée de façon à générer les données de sortie (D) de telle sorte que, à une troisième occasion, lorsqu'au moins une autre condition concernant le au moins un paramètre d'évènement (H) est satisfaite, le signal d'état (S) produise en résultat la génération dans l'unité de visualisation (110) d'un signal acoustique (A) sans que lesdites données graphiques (B3) ou ladite information de texte (145) ne soient présentées.

4. Système selon l'une quelconque des revendications 1 à 3, dans lequel l'unité de commande (120) est adaptée pour :
recevoir des signaux générés manuellement (K), qui accusent réception d'une présentation d'information par l'intermédiaire de l'unité de visualisation (110), et en réponse à un signal (K) reçu en accusé de réception de la présentation d'un certain signal d'état (S) par l'intermédiaire d'un premier type de présentation d'information lors d'une occasion suivante où ce signal d'état (S) est reçu, et
générer des données de sortie (D) pour la présentation du signal d'état (S) par l'intermédiaire d'un deuxième type de présentation d'information, et
de telle sorte que l'historique de présentation (H) mémorisé dans l'espace de mémorisation (170, 175) pour chaque signal d'état (S) indique si oui ou non un signal d'accusé de réception (K) a été reçu pour un type respectif de présentation d'information parmi des types de présentation d'information applicables pour le signal d'état (S).

5. Système selon l'une quelconque des revendications précédentes, tel que l'espace de mémorisation (170) pour l'historique de présentation (H) fasse partie d'un composant spécifique au véhicule.

6. Système selon l'une quelconque des revendications précédentes, tel que le système comprenne des moyens configurés de façon à recevoir des données décrivant l'identité (ID) et de façon à recevoir des détails d'authentification concernant cette dernière.

7. Système selon l'une quelconque des revendications 1 à 4, tel que le système comprenne une unité d'implantation (160) qui est configurée de façon à :
recevoir un module de mémoire spécifique au conducteur (165), et
lire l'identité (ID) à partir d'un module de mémoire (165) disposé dans l'unité d'implantation (165).

8. Système selon la revendication 7, tel que le module de mémoire spécifique au conducteur (165) comprenne l'espace de mémorisation (175) pour l'historique de présentation (H).

9. Procédé pour la présentation d'information dans un véhicule à moteur, ce procédé comprenant :
la présentation, par l'intermédiaire d'une unité de visualisation (110), d'une information concernant le véhicule et/ou l'environnement du véhicule,
la réception de signaux d'état (S) décrivant des états du véhicule et/ou de son environnement,
la réception d'au moins un paramètre d'évènement (P, H), et, en fonction des signaux d'état (S) et du paramètre d'évènement au nombre d'au moins un (P, H),
la génération de données de sortie (D) pour une présentation par l'intermédiaire de l'unité de visualisation (110), ces données de sortie (D) étant telles qu'un certain signal d'état (S) produise en résultat un premier type de présentation d'information à une première occasion et un deuxième type de présentation d'information à une deuxième occasion, pourvu qu'au moins une condition non satisfaite à la première occasion en ce qui concerne au moins un paramètre d'évènement (P, H) soit satisfaite à la deuxième occasion,
la réception d'une identité spécifique au conducteur (ID),
la lecture de paramètres de présentation (P) à partir d'un espace de mémorisation prédéterminé (170, 175),
la génération des données de sortie (D) en fonction, de façon additionnelle, de l'identité (ID) et des paramètres de présentation (P), de telle sorte qu'un certain signal d'état (S) produise en résultat une présentation d'information par l'intermédiaire de l'unité de visualisation (110), cette présentation dépendant d'un historique de présentation (H) reflété par les paramètres de présentation (P) pour l'identité respective (ID),
la mise à jour continue de l'historique de présentation (H) mémorisé dans l'espace de mémorisation prédéterminé (170, 175),
la présentation de ladite information par l'intermédiaire d'une interface visuelle (130, 140) et/ou d'une interface acoustique (150), et
la présentation de ladite information sous la forme d'une information de texte (145) et/ou de données graphiques (B1, B2, B3, B4) sous forme de symboles,
**caractérisé par** :
la génération des données de sortie (D) lors de ladite première occasion de telle sorte qu'un certain signal d'état (S) produise en résultat la présentation dans l'unité de visualisation (110) d'une information de texte (145) et de données graphiques (B3) sous forme de symboles, et
la génération des données de sortie (D) lors de ladite deuxième occasion de telle sorte que le signal d'état (S) produise en résultat la présentation dans l'unité de visualisation (110) de données graphiques (B3) sous forme de symboles sans la présentation de ladite information de texte (145), l'historique de présentation (H) indiquant :
le nombre de fois où un certain type d'information a été présenté par l'intermédiaire d'un type donné de présentation d'information, et/ou
le temps qui s'est écoulé depuis qu'un certain type d'information a été présenté par l'intermédiaire d'un type donné de présentation d'information lorsque le module de mémoire (165) connecté au moment où à l'unité d'implantation (160) a été connectée à l'unité d'implantation (160).

10. Procédé selon la revendication 9, comprenant la présentation de ladite information sous la forme de signaux acoustiques (A).

11. Procédé selon les revendications 9 et 10, comprenant la génération des données de sortie (D) de telle sorte que, à une troisième occasion, lorsqu'au moins une autre condition concernant le paramètre d'évènement au nombre d'au moins un (H) est satisfaite, le signal d'état (S) produise en résultat la génération dans l'unité de visualisation (110) d'un signal acoustique (A) sans que lesdites données graphiques (B3) ni ladite information de texte (145) ne soient présentées.

12. Procédé selon l'une quelconque des revendications 9 à 11, comprenant les étapes consécutives consistant à :
recevoir un premier signal d'état (S),
générer un premier type de présentation d'information (145, B3), reflétant le premier signal d'état (S),
recevoir un signal généré manuellement (K), qui accuse réception du premier type de présentation d'information (145, B3),
mettre à jour l'historique de présentation (H) pour le premier signal d'état (S) en ce qui concerne :
le type de présentation d'information (145, B3), et
un temps pour recevoir le signal d'accusé de réception (K),
recevoir le premier signal d'état (S), et
générer un deuxième type de présentation d'information (B3) qui reflète le premier signal d'état (S), pourvu que le premier signal d'état (S) soit reçu à l'intérieur d'une période de temps prédéterminée après le temps où a été reçu le signal d'accusé de réception (K).

13. Programme informatique pouvant être directement téléchargé dans la mémoire interne (M) d'un ordinateur, comprenant un logiciel pour commander les étapes selon l'une quelconque des revendications 9 à 12 lorsque ledit programme est exécuté sur l'ordinateur.

14. Support lisible par un ordinateur (M) avec un programme mémorisé sur celui-ci, ce programme étant adapté de façon à permettre à un ordinateur de commander les étapes selon l'une quelconque des revendications 9 à 12.
